# EUROPÄISCHE PATENTSCHRIFT

(11) **EP 4 102 198 B1**
(45) Veröffentlichungstag und Bekanntmachung des Hinweises auf die Patenterteilung: **03.09.2025**
(21) Anmeldenummer: 21178294.1
(22) Anmeldetag: 08.06.2021
(51) Int. Cl.: G01K 17/10

(54) **ENERGIEZÄHLER UND VERFAHREN ZUR ERFASSUNG EINER THERMISCHEN ENERGIEMENGE**
ENERGY METER AND METHOD FOR DETECTING A THERMAL ENERGY QUANTITY
COMPTEUR D'ÉNERGIE ET PROCÉDÉ DE DÉTECTION D'UNE QUANTITÉ D'ÉNERGIE THERMIQUE

(43) Veröffentlichungstag der Anmeldung: 14.12.2022
(73) Patentinhaber: Landis+Gyr GmbH, 90459 Nürnberg (DE)
(72) Erfinder: Bodächtel, Andreas, 91623 Sachsen (DE); Adler, Thomas, 90409 Nürnberg (DE); Fischer, Stefan, 91126 Schwabach (DE)
(74) Vertreter: Marks & Clerk LLP

(56) Entgegenhaltungen:
- WO-A1-2014/180484
- DE-A1- 102010 011 272
- DE-A1- 102015 001 379

## Beschreibung

Die Erfindung betrifft einen Energiezähler sowie ein Verfahren zur Erfassung einer mittels eines Transportmediums an einen Verbraucher gelieferten thermischen Energiemenge.

Ein derartiger Energiezähler ist beispielsweise aus der DE 10 2007 014 810 B3 bekannt. Er kann als Wärme- oder Kältezähler ausgeführt sein, welcher die an den Verbraucher gelieferte Wärme- oder Kältemenge, also die gelieferte thermische Energiemenge, u.a. auf Grundlage der (Ultra-)Schall-messtechnik erfasst. Impulsförmige (Ultra-)Schallsignale werden mittels (Ultra-)Schallwandlern erzeugt sowie in Flussrichtung und entgegen der Flussrichtung durch das Transportmedium gesendet. Der Unterschied der Laufzeiten der Schallsignale in beiden Laufrichtungen wird zur Ermittlung der Durchflussmenge des Transportmediums ausgewertet. Diese (ultra-) schallbasierte Erfassung der Durchflussmenge oder -rate arbeitet nach dem Laufzeitdifferenzprinzip. Zusätzlich wird die Temperatur des Transportmediums mittels zweier Temperatursensoren einmal vor dem Verbraucher, also auf einer zum Verbraucher hinführenden Seite des Verbrauchers, als Vorlauftemperatur und einmal nach dem Verbraucher, also auf einer vom Verbraucher wegführenden Seite des Verbrauchers, als Rücklauftemperatur ermittelt. Aus der Temperaturdifferenz zwischen Vor- und Rücklauftemperatur sowie aus der Durchflussmenge lässt sich dann die gelieferte Wärme- oder Kältemenge ermitteln, welche z.B. auch als Grundlage für die Abrechnung dienen kann.

In der DE 10 2018 003 671 A1 wird ein Energiezähler beschrieben, bei dem anhand der Durchflussmengenbestimmung auch eine dritte Temperatur, nämlich die des Energiezählers selbst, ermittelt wird und mit den beiden mittels der zwei Temperatursensoren gemessenen Temperaturen des Transportmediums verglichen wird. Anhand dieser beiden Temperaturdifferenzen wird automatisch zugeordnet, welcher der beiden Temperatursensoren sich im Vorlauf und welcher sich im Rücklauf befindet. Der Temperatursensor mit der geringeren Temperaturdifferenz wird dabei dem Installationsort des Energiezählers, d.h. dementsprechend dem Vorlauf oder dem Rücklauf, zugeordnet. Dadurch soll der Installations- und Wartungsaufwand verringert werden. Trotzdem kann es aber immer noch zu wartungsintensiven Fehlinstallationen kommen, beispielsweise dann, wenn für den Energiezähler selbst ein falscher Installationsort hinterlegt, eingegeben oder ermittelt worden ist.

WO 2014/180484 A1 beschreibt einen Verbrauchszähler zum Messen von Verbrauchsdaten entweder einer heißen oder einer kalten Flüssigkeit, die einer Verbraucherstelle zugeführt wird. Der Verbrauchszähler umfasst eine Durchflussmessereinheit, die zur Montage entweder an einer Einlassseite oder einer Auslassseite der Verbraucherstelle angeordnet ist und zum Messen einer Durchflussmenge der zugeführten Flüssigkeit angeordnet ist; einen Einlasstemperatursensor zum Messen einer Einlasstemperatur des zugeführten flüssigen Mediums und einen Auslasstemperatursensor zum Messen einer Auslasstemperatur des zugeführten flüssigen Mediums; eine Recheneinheit, die konfiguriert ist, Verbrauchswerte basierend auf der Durchflussmenge, der Einlasstemperatur und der Auslasstemperatur zu bestimmen. Der Verbrauchszähler umfasst mindestens zwei eichfähige Verbrauchsregister zur Speicherung von für die Abrechnung verifizierten Verbrauchswerten. Jedes der eichfähigen Verbrauchsregister ist einem Betriebszustand des Verbrauchszählers zugeordnet, so dass der Verbrauchszähler in der Lage ist, eichfähige Verbrauchsdaten für jeden der mindestens zwei Betriebszustände zu messen.

DE 10 2010 011272 A1 beschreibt einen Zähler, der eine Durchflussmesseinheit und zwei Temperatursensoren aufweist, die die Vorlauf- bzw. Rücklauftemperatur von Transportmedien erfassen. Eine Elektronikeinheit ermittelt positive Strömung und negative Strömung der Transportmedien in einer Strömungsrichtung und positive oder negative Temperaturdifferenzen zwischen Vorlauf- und Rücklauftemperatur. Gleichzeitig werden Informationen über positive und negative Strömungen, die von der elektronischen Einheit bestimmt werden, und die positiven oder negativen Temperaturdifferenzen auf einer Anzeigevorrichtung, d. h. optional einem farbigen LCD-Display, ausgegeben.

DE 10 2015 001379 A1 beschreibt ein Durchflusszähler zur Erfassung der Durchflussmenge und/oder der Wärmemenge eines strömenden Fluids zum Einbau in eine das Fluid beinhaltende Versorgungsleitung mit einer Messanordnung, die von dem Fluid mit einer Zählerdurchflussrichtung, in der der Durchflusszähler dauerhaft betrieben wird, durchströmt wird, einer Steuer- und Auswerteeinheit, welche die Messanordnung steuert und Durchflussmengendaten ermittelt, wobei anhand der Durchflussmengendaten die einbauabhängige Durchflussrichtung von der Steuer- und Auswerteeinheit als Einbaudurchflussrichtung selbsttätig ermittelt wird, und/oder einer Temperaturmesseinrichtung, welche einen ersten Temperatursensor sowie einen zweiten Temperatursensor umfasst, wobei der erste Temperatursensor und der zweite Temperatursensor zur Ermittlung einer Temperaturdifferenz zwischen einer Vorlauftemperatur im Vorlauf und einer Rücklauftemperatur im Rücklauf vorgesehen sind, anhand der Temperaturdifferenz der Einbauort des ersten Temperatursensors sowie des zweiten Temperatursensors im Vor- bzw. Rücklauf von der Steuer- und Auswerteeinheit selbsttätig ermittelt wird, wobei sich die Steuer- und Auswerteeinheit bei einer Erst- oder Wiederinstallation des Durchflusszählers selbsttätig konfiguriert derart, dass in dem der Erstinstallation nachfolgenden Dauerbetrieb die Zählerdurchflussrichtung an die Einbaudurchflussrichtung angepasst ist, so dass die Zählerdurchflussrichtung und die Einbaudurchflussrichtung übereinstimmen und/oder in Abhängigkeit von der gemessenen Temperaturdifferenz der erste Temperatursensor sowie der zweite Temperatursensor dem Vorlauf bzw. Rücklauf zugeordnet werden.

Eine Aufgabe der Erfindung besteht darin, einen Energiezähler der eingangs bezeichneten Art mit gegenüber dem Stand der Technik verbesserten Eigenschaften anzugeben.

Zur Lösung dieser Aufgabe wird ein Energiezähler entsprechend den Merkmalen des Patentanspruchs 1 angegeben. Der erfindungsgemäße Energiezähler weist eine Durchflussmesseinheit, einen ersten Temperatursensor zur Erfassung einer ersten Temperatur des Transportmediums, einen zweiten Temperatursensor zur Erfassung einer zweiten Temperatur des Transportmediums und eine Steuer- und Auswerteeinheit auf. Dabei ist während des eigentlichen Betriebs des Energiezählers von dem ersten und zweiten Temperatursensor jeweils einer auf einer zum Verbraucher hinführenden Seite des Verbrauchers und der andere auf einer vom Verbraucher wegführenden Seite des Verbrauchers platziert, und sind die Durchflussmesseinheit sowie der erste und der zweite Temperatursensor zumindest während des eigentlichen Betriebs des Energiezählers an die Steuer- und Auswerteeinheit angeschlossen. Weiterhin sind in der Steuer- und Auswerteeinheit mindestens ein Kältezähler-Temperaturgrenzwert und mindestens ein Wärmezähler-Temperaturgrenzwert hinterlegt, und ist die Steuer- und Auswerteeinheit dazu ausgelegt, während eines Testbetriebs anhand eines ersten Temperatur-Vergleichs der ersten und der zweiten Temperatur die hiervon niedrigere Temperatur und höhere Temperatur zu ermitteln, und anhand eines zweiten Temperatur-Vergleichs der niedrigeren Temperatur mit dem mindestens einen Kältezähler-Temperaturgrenzwert und eines dritten Temperatur-Vergleichs der höheren Temperatur mit dem mindestens einen Wärmezähler-Temperaturgrenzwert selbsttätig zu erkennen und festzuhalten, ob der der Energiezähler ein Wärmezähler oder ein Kältezähler während des späteren eigentlichen Zählbetriebs ist, wobei der Energiezähler als Kältezähler eingestuft und festgehalten wird, wenn die niedrigere Temperatur unter dem mindestens einen Kältezähler-Temperaturgrenzwert und die höhere Temperatur unter dem mindestens einen Wärmezähler-Temperaturgrenzwert liegt, und der Energiezähler als Wärmezähler eingestuft und festgehalten wird, wenn die niedrigere Temperatur über dem mindestens einen Kältezähler-Temperaturgrenzwert und die höhere Temperatur über dem mindestens einen Wärmezähler-Temperaturgrenzwert liegt.

Der Verbraucher ist z.B. an eine Rohrleitung angeschlossen, in der das Transportmedium, das ihn mit der maßgeblichen thermischen Energie versorgt, geführt wird. Die zum Verbraucher hinführende Seite wird insbesondere auch als Vorlauf bezeichnet. Dort wird das Transportmedium zum Verbraucher hin transportiert. Dementsprechend wird die vom Verbraucher wegführende Seite als Rücklauf bezeichnet. Dort wird das Transportmedium vom Verbraucher weg transportiert.

Es wurde erkannt, dass anhand der ohnehin in einem Energiezähler während des Betriebs verfügbaren Informationen eine Selbstkonfiguration durchgeführt werden kann. Diese Selbstkonfiguration wird während des Testbetriebs durchgeführt und kann insbesondere bei der Erstinbetriebnahme nach erfolgtem Einbau des Energiezählers in ein das Transportmedium führendes Rohrleitungssystem erfolgen, aber bei Bedarf auch zu einem späteren Zeitpunkt, beispielsweise während einer Wartung. Der Testbetrieb mit der Selbstkonfiguration findet insbesondere vor dem eigentlichen Zählbetrieb des Energiezählers statt. Der Energiezähler führt während dieser Selbstkonfiguration ohne Zutun des Montage- oder Bedienpersonals eine selbststätige Prüfung und Erkennung der Energieart durch. Dies bedeutet, dass der Energiezähler automatisch erkennt, als welche Art von Energiezähler er in der vorliegenden Einbausituation und damit auch während des eigentlichen Zählbetriebs betrieben wird, also insbesondere als Wärmezähler oder als Kältezähler. Diese vorteilhafte automatische Energiearterkennung erfolgt dabei lediglich anhand der z.B. im Vorlauf erfassten ersten Temperatur des Transportmediums und der z.B. im Rücklauf erfassten zweiten Temperatur des Transportmediums. Beide Temperaturen werden ohnehin auch für den eigentlichen Zählbetrieb erfasst. Für die Selbstkonfiguration müssen also vorteilhafterweise keine zusätzlichen oder gesonderten Messgrößen erfasst werden. Dies hält den Aufwand der Selbstkonfiguration sehr gering.

Zur selbststätigen Energiearterkennung werden in der Steuer- und Auswerteeinheit des Energiezählers einige Prüfungen der für die erste und die zweite Temperatur während des Testbetriebs erfassten Werte durchgeführt. Zunächst wird geprüft, welche der beiden Temperaturen die niedrigere und welche die höhere ist. Danach wird überprüft, ob der Wert der so ermittelten niedrigeren Temperatur kleiner als der mindestens eine Kältezähler-Temperaturgrenzwert und ob der Wert der höheren Temperatur größer als der mindestens eine Wärmezähler-Temperaturgrenzwert ist. Stellt sich dabei insbesondere heraus, dass die niedrigere Temperatur unter dem Kältezähler-Temperaturgrenzwert und die höhere Temperatur unter dem Wärmezähler-Temperaturgrenzwert liegt, wird der Energiezähler als Kältezähler eingestuft und dies auch so festgehalten. Ergeben die Prüfungen dagegen insbesondere, dass die niedrigere Temperatur über dem Kältezähler-Temperaturgrenzwert und die höhere Temperatur über dem Wärmezähler-Temperaturgrenzwert liegt, wird der Energiezähler als Wärmezähler eingestuft und dies auch so festgehalten. Diese selbststätige Festlegung der Energieart erfolgt also vorzugsweise lediglich anhand dreier einfacher Temperaturvergleiche, was sich sehr einfach realisieren lässt und zugleich zu einem zuverlässigen Ergebnis führt.

Der mindestens eine Kältezähler-Temperaturgrenzwert liegt insbesondere in einem Bereich zwischen 5°C (Celsius) und 60°C, vorzugsweise zwischen 5°C und 35°C, bevorzugt zwischen 5°C und 20°C, und höchst bevorzugt bei 15°C oder bei 20°C. Der mindestens eine Wärmezähler-Temperaturgrenzwert liegt insbesondere in einem Bereich zwischen 10°C und 130°C, vorzugsweise zwischen 20°C und 130°C, bevorzugt zwischen 25°C und 130°C, und höchst bevorzugt bei 25°C oder bei 35°C. Diese Werte gelten insbesondere jeweils für den Fall, dass genau ein Kältezähler-Temperaturgrenzwert und/oder genau ein Wärmezähler-Temperaturgrenzwert vorliegt, aber auch für den Fall, dass mehr als ein Kältezähler-Temperaturgrenzwert, beispielsweise zwei, und/oder mehr als ein Wärmezähler-Temperaturgrenzwert, beispielsweise zwei, vorliegen. Vorzugsweise liegen höchstens drei verschiedene Kältezähler- Temperaturgrenzwerte und/oder höchstens drei verschiedene Wärmezähler-Temperaturgrenzwerte vor.

Die automatische Energiearterkennung bietet auch logistische Vorteile. So ist es nicht mehr notwendig, gesonderte Gerätetypen in Form von Wärmezählern und von Kältezählern vorzuhalten. Ein universeller Energiezähler reicht aus. Er kann für beide Energiearten verwendet werden. Außerdem werden Montagefehler so vermieden.

Die Durchflussmesseinheit und die beiden Temperatursensoren sind während des eigentlichen Betriebs des Energiezählers an die Steuer- und Auswerteeinheit angeschlossen. Insbesondere im noch nicht am Einsatzort montierten Auslieferungszustand muss dies aber nicht zwingend so sein. In dem Auslieferungszustand kann der Energiezähler zumindest teilweise in Form noch nicht zusammengebauter Einzelkomponenten vorliegen. Die noch nicht montierten Einzelkomponenten sind in einem solchen Auslieferungszustand an die Steuer- und Auswerteeinheit anschließbar, also insbesondere zu einem Anschluss an die Steuer-und Auswerteeinheit ausgelegt.

Vorteilhafte Ausgestaltungen des erfindungsgemäßen Energiezählers ergeben sich aus den Merkmalen der von Anspruch 1 abhängigen Ansprüche.

Günstig ist eine Ausgestaltung, bei der in der Steuer- und Auswerteeinheit ein erster und ein zweiter Wärmezähler-Temperaturgrenzwert hinterlegt sind, und die Steuer-und Auswerteeinheit dazu ausgelegt ist, während des Testbetriebs bei der selbsttätigen Erkennung der Art des Energiezählers je nach Ergebnis des zweiten Temperatur-Vergleichs beim dritten Temperatur-Vergleich die höhere Temperatur mit dem ersten Wärmezähler-Temperaturgrenzwert oder mit dem zweiten Wärmezähler-Temperaturgrenzwert zu vergleichen. Insbesondere unterscheiden sich der erste und der zweite Wärmezähler-Temperaturgrenzwert voneinander. Insbesondere ist der erste Wärmezähler-Temperaturgrenzwert größer als der zweite Wärmezähler-Temperaturgrenzwert. Vorzugsweise liegt eine Differenz zwischen dem ersten und dem zweiten Wärmezähler-Temperaturgrenzwert bei mindestens 5 K (Kelvin), insbesondere im Bereich zwischen 5 K und 50 K, bevorzugt zwischen 5 K und 25 K, und höchst bevorzugt bei 10 K oder bei 15 K. Beispielsweise beträgt der erste Wärmezähler-Temperaturgrenzwert 35°C und der zweite Wärmezähler-Temperaturgrenzwert 25°C. Wird also insbesondere beim zweiten Temperatur-Vergleich festgestellt, dass die niedrigere Temperatur über oder zumindest nicht unter dem Kältezähler-Temperaturgrenzwert liegt, wird im Rahmen des dritten Temperatur-Vergleichs beispielsweise überprüft, ob die höhere Temperatur größer als der erste Wärmezähler-Temperaturgrenzwert (z.B. 35°C) ist. Ist dies der Fall, wird der Energiezähler als Wärmezähler eingestuft. Ergibt der zweite Temperatur-Vergleich dagegen insbesondere, dass die niedrigere Temperatur kleiner als der Kältezähler-Temperaturgrenzwert ist, wird im Rahmen des dritten Temperatur-Vergleichs beispielsweise überprüft, ob die höhere Temperatur größer als der zweite Wärmezähler-Temperaturgrenzwert (z.B. 25°C) ist. Ist dies nicht der Fall, wird der Energiezähler als Kältezähler eingestuft. Aufgrund dieser Verwendung der beiden unterschiedlichen Wärmezähler-Temperaturgrenzwerte ergibt sich eine noch höhere Sicherheit vor einer unerwünschten Fehlbeurteilung der maßgeblichen Energieart.

Gemäß einer weiteren günstigen Ausgestaltung ist während des Betriebs des Energiezählers die Durchflussmesseinheit auf der gleichen Seite des Verbrauchers wie der erste Temperatursensor platziert, wobei die Steuer-und Auswerteeinheit dazu ausgelegt ist, während des Testbetriebs anhand der insbesondere bereits getroffenen Zuordnung der ersten oder zweiten Temperatur jeweils zur niedrigeren oder höheren Temperatur selbsttätig zu erkennen und für den späteren eigentlichen Zählbetrieb festzuhalten, ob die Durchflussmesseinheit und der erste Temperatursensor im Vorlauf, also insbesondere in einer zum Verbraucher hinführenden Zuleitung, oder im Rücklauf, also insbesondere in einer vom Verbraucher wegführenden Rückleitung, platziert sind. Hierbei wird insbesondere auch das Ergebnis der vorher durchgeführten Erkennung der Energieart bzw. der Art des Energiezählers mit berücksichtigt. Insbesondere können der erste Temperatursensor und die Durchflussmesseinheit eine gemeinsame Baueinheit bilden oder jeweils Bestandteile einer gemeinsamen Baueinheit sein. Dies ist allerdings nicht zwingend notwendig. Ebenso ist es möglich, dass der erste Temperatursensor und die Durchflussmesseinheit in zwei voneinander verschiedenen Baueinheiten untergebracht sind. Falls die insbesondere vorangeschaltete Erkennung der Energieart einen Betrieb des Energiezählers als Wärmezähler geliefert hat, wird beispielsweise geprüft, ob die erste Temperatur die höhere Temperatur ist. Falls ja, befinden sich die Durchflussmesseinheit und der erste Temperatursensor insbesondere im Vorlauf, falls nein, insbesondere im Rücklauf. Falls das Ergebnis der Energiearterkennung ein Kältezähler ist, führt die Überprüfung, ob insbesondere die erste Temperatur die höhere Temperatur ist, im positiven Fall zu dem Ergebnis, dass die Durchflussmesseinheit und der erste Temperatursensor insbesondere im Rücklauf platziert sind, und im negativen Fall zu dem Ergebnis, dass die Durchflussmesseinheit und der erste Temperatursensor insbesondere im Vorlauf platziert sind. Alternativ kann auch überprüft werden, ob die erste Temperatur die niedrigere Temperatur oder ob die zweite Temperatur die höhere Temperatur oder ob die zweite Temperatur die niedrigere Temperatur ist. Die Rückschlüsse sind dann entsprechend anzupassen. Die Ergebnisse für den Einbauort der vorstehend angesprochenen Komponenten im Vor- oder Rücklauf sind aber bei allen alternativen Überprüfungen identisch. Die alternativen Überprüfungen sind insofern insbesondere gleichwertig. Vorteilhafterweise erfolgt auch die Überprüfung des Einbauorts der maßgeblichen Komponenten des Energiezählers selbsttätig bzw. automatisch. Auch die Prüfung/Erkennung und Speicherung des Einbauorts ist insbesondere Teil der Selbstkonfiguration des Energiezählers. Die Einbauorterkennung lässt sich ebenfalls einfach realisieren. Es werden wiederum keine gesonderten Messgrößen benötigt. Auch für die Prüfung/Erkennung des Einbauorts kann auf die ohnehin während des eigentlichen Zählbetriebs des Energiezählers zu erfassenden Messgrößen, nämlich die erste und/oder zweite Temperatur, zurückgegriffen werden. Die automatische Einbauorterkennung führt zu weiteren logistischen Vorteilen. So ist es nicht mehr notwendig, gesonderte Gerätetypen zum Einbau in den Vorlauf und in den Rücklauf vorzuhalten. Ein universeller Energiezähler reicht aus. Er kann für beide Einbauarten (und auch für beide Energiearten) verwendet werden. Außerdem reduziert sich so das Risiko von Montagefehlern weiter. Bislang wird nämlich versucht, Montagefehler dadurch zu verhindern, dass die Geräte beschriftet sind, ob sie für einen Einbau im Vorlauf oder im Rücklauf bestimmt sind, und dass in der Bedienungsanleitung der korrekte Einbau beschrieben wird. Alternativ werden Geräte mit parametrisierbarem Einbauort geliefert. Hier muss das Gerät bei der Installation für den Einbau im Vorlauf oder im Rücklauf parametrisiert werden. In beiden Fällen muss das Montagepersonal tätig werden und die Gegebenheiten richtig erkennen und umsetzen. In der Vergangenheit ist es hierbei des Öfteren zu Fehlern gekommen, welche sich durch die vorteilhafte automatische Prüfung/Erkennung und Speicherung des Einbauorts vermeiden lassen.

Gemäß einer weiteren günstigen Ausgestaltung ist die Steuer- und Auswerteeinheit dazu ausgelegt, während des Testbetriebs einen Volumenstrom des Transportmediums durch die Durchflussmesseinheit zu ermitteln und anhand des Vorzeichens des Volumenstroms eine Durchflussrichtung des Transportmediums durch die Durchflussmesseinheit selbsttätig zu erkennen und für den späteren eigentlichen Zählbetrieb festzuhalten. Hierbei handelt es sich insbesondere um eine wiederum automatische Prüfung und Erkennung, in diesem Fall der Durchflussrichtung. Auch die Durchflussrichtungserkennung kann insbesondere Bestandteil der Selbstkonfiguration des Energiezählers sein. Sie führt zu einer weiteren Reduktion möglicher Montagefehler. Die Erkennung der Durchflussrichtung anhand des Vorzeichens des Volumenstroms ist vorzugsweise eine Kontrolluntersuchung. Die Durchflussrichtung lässt sich nämlich insbesondere auch schon aus den anderen beiden Prüfungen auf Erkennung der Energieart und des Einbauorts ableiten. Die Ergebnisse beider Ermittlungsarten für die Durchflussrichtung können miteinander verglichen und auf Konsistenz geprüft werden.

Gemäß einer weiteren günstigen Ausgestaltung ist die Steuer- und Auswerteeinheit zu einer Prüfung ausgelegt, ob insbesondere während des Testbetriebs Testbedingungen herrschen, unter denen der Testbetrieb zu aussagekräftigen Ergebnissen führt. Ist eine Anlage zur Versorgung eines Verbrauchers mit thermischer Energie nicht in Betrieb, kann es beispielsweise durch Konvektionsströmungen, Wartungsarbeiten an anderer Stelle oder auch durch bloße Sonneneinstrahlung dazu kommen, dass der Energiezähler beispielsweise falsche Temperaturen erfasst und/oder falsche Temperaturdifferenzen ermittelt, was dann zu falschen Ergebnissen bei den während des Testbetriebs durchgeführten Überprüfungen, also insbesondere bei den Überprüfungen zur Selbstkonfiguration, führen kann. Deshalb ist es vorteilhaft auszuschließen, dass während des Testbetriebs unzulässige Bedingungen, wie sie vorstehend beispielhaft beschrieben sind, herrschen. Insbesondere wird überprüft, ob während des Testbetriebs Testbedingungen herrschen, die vergleichbar zu denen des eigentlichen Zählbetriebs sind.

Gemäß einer weiteren günstigen Ausgestaltung sind die von Steuer- und Auswerteeinheit geprüften Testbedingungen, ob innerhalb einer Mindest-Zeitspanne sowohl ein über einem Durchfluss-Grenzwert liegender absoluter Volumenstrom des Transportmediums durch die Durchflussmesseinheit als auch eine über einem Temperaturdifferenz-Grenzwert liegende absolute Temperaturdifferenz zwischen der ersten und der zweiten Temperatur gegeben sind. Der Durchfluss-Grenzwert liegt insbesondere in einem Bereich zwischen 1% und 100% des Nenndurchflusses, für den der Energiezähler spezifiziert ist, vorzugsweise zwischen 5% und 100% des Nenndurchflusses, bevorzugt zwischen 10% und 100% des Nenndurchflusses, und höchst bevorzugt bei 10% des Nenndurchflusses. Der Temperaturdifferenz-Grenzwert liegt insbesondere in einem Bereich zwischen 0 K (= Kelvin) und 50 K, vorzugsweise zwischen 1 K und 50 K, bevorzugt zwischen 2 K und 50 K, und höchst bevorzugt bei 2 K. Die Mindest-Zeitspanne liegt insbesondere in einem Bereich zwischen einer Minute und einem Tag, vorzugsweise zwischen 30 Minuten und einem Tag, bevorzugt zwischen 60 Minuten und einem Tag, und höchst bevorzugt bei 60 Minuten. Wenn diese Testbedingungen erfüllt sind, liegen Verhältnisse vor, bei denen die Überprüfungen/Erkennungen der Energieart, des Einbauorts und/oder der Durchflussrichtung zu sinnvollen und weiter verwendbaren Ergebnissen führen, die dann auch zur Verwendung während des eigentlichen Zählbetriebs gespeichert werden können.

Eine weitere Aufgabe der Erfindung besteht darin, ein Verfahren der eingangs bezeichneten Art mit gegenüber dem Stand der Technik verbesserten Eigenschaften anzugeben.

Zur Lösung der das Verfahren betreffenden Aufgabe wird ein Verfahren entsprechend den Merkmalen des Anspruchs 7 angegeben. Bei dem erfindungsgemäßen Verfahren wird bzw. werden ein Volumenstrom des strömenden Transportmediums gemessen, auf einer zum Verbraucher hinführenden Seite des Verbrauchers eine erste Temperatur des Transportmediums und auf einer vom Verbraucher wegführenden Seite des Verbrauchers eine zweite Temperatur des Transportmediums gemessen, die thermische Energiemenge während des eigentlichen Zählbetriebs anhand des gemessenen Volumenstroms und der gemessenen ersten und zweiten Temperatur ermittelt, und während eines Testbetriebs anhand eines ersten Temperatur-Vergleichs der ersten und der zweiten Temperatur die hiervon niedrigere Temperatur und höhere Temperatur ermittelt sowie anhand eines zweiten Temperatur-Vergleichs der niedrigeren Temperatur mit einem Kältezähler-Grenzwert und eines dritten Temperatur-Vergleichs der höheren Temperatur mit einem Wärmezähler-Grenzwert selbsttätig, insbesondere mittels einer Steuer- und Auswerteeinheit, erkannt und festgehalten, ob die während des späteren eigentlichen Zählbetriebs erfasste thermische Energiemenge eine Wärmemenge oder eine Kältemenge ist, wobei die thermische Energiemenge als Kältemenge eingestuft und festgehalten wird, wenn die niedrigere Temperatur unter dem Kältezähler-Temperaturgrenzwert und die höhere Temperatur unter dem Wärmezähler-Temperaturgrenzwert liegt, und die thermische Energiemenge als Wärmemenge eingestuft und festgehalten wird, wenn die niedrigere Temperatur über dem Kältezähler-Temperaturgrenzwert und die höhere Temperatur über dem Wärmezähler-Temperaturgrenzwert liegt.

Das erfindungsgemäße Verfahren und seine Ausgestaltungen bieten im Wesentlichen die gleichen Vorteile, die bereits im Zusammenhang mit dem erfindungsgemäßen Energiezähler beschrieben worden sind.

Besonders vorteilhafte Ausgestaltungen des erfindungsgemäßen Verfahrens ergeben sich aus den Merkmalen der von Anspruch 7 abhängigen Ansprüche.

Günstig ist eine Ausgestaltung, bei der je nach Ergebnis des zweiten Temperatur-Vergleichs beim dritten Temperatur-Vergleich die höhere Temperatur mit einem ersten Wärmezähler-Temperaturgrenzwert oder mit einem zweiten Wärmezähler-Temperaturgrenzwert verglichen wird.

Gemäß einer weiteren günstigen Ausgestaltung wird die Messung des Volumenstroms auf der gleichen Seite des Verbrauchers wie die Messung der ersten Temperatur durchgeführt, und während des Testbetriebs anhand der, insbesondere bereits getroffenen, Zuordnung der ersten oder zweiten Temperatur jeweils zur niedrigeren oder höheren Temperatur selbsttätig, insbesondere mittels einer Steuer- und Auswerteeinheit, erkannt und für den späteren eigentlichen Zählbetrieb festgehalten, ob die Messung des Volumenstroms und die Messung der ersten Temperatur im Vorlauf, also insbesondere in einer zum Verbraucher hinführenden Zuleitung, oder im Rücklauf, also insbesondere in einer vom Verbraucher wegführenden Rückleitung, durchgeführt werden.

Gemäß einer weiteren günstigen Ausgestaltung wird während des Testbetriebs anhand des Vorzeichens des Volumenstroms eine Durchflussrichtung des Transportmediums durch eine zur Messung des Volumenstroms verwendete Durchflussmesseinheit selbsttätig, insbesondere mittels einer Steuer- und Auswerteeinheit, erkannt und für den späteren eigentlichen Zählbetrieb festgehalten.

Gemäß einer weiteren günstigen Ausgestaltung wird, insbesondere mittels einer Steuer- und Auswerteeinheit, geprüft, ob Testbedingungen herrschen, unter denen der Testbetrieb zu aussagekräftigen Ergebnissen führt.

Gemäß einer weiteren günstigen Ausgestaltung sind die geprüften Testbedingungen, ob innerhalb einer Mindest-Zeitspanne sowohl ein über einem Durchfluss-Grenzwert liegender absoluter Volumenstrom des Transportmediums als auch eine über einem Temperaturdifferenz-Grenzwert liegende absolute Temperaturdifferenz zwischen der ersten und der zweiten Temperatur gegeben sind.

Weitere Merkmale, Vorteile und Einzelheiten der Erfindung ergeben sich aus der nachfolgenden Beschreibung von Ausführungsbeispielen anhand der Zeichnung. Es zeigt:
Fig. 1 eine schematische Darstellung eines in einer ersten Konstellation eingebauten Energiezählers mit Selbstkonfigurationsfunktion,
Fig. 2 ein Ablaufdiagramm einer ersten Selbstkonfigurationsfunktion des Energiezählers gemäß Fig. 1,
Fig. 3 ein Ablaufdiagramm einer zweiten Selbstkonfigurationsfunktion des Energiezählers gemäß Fig. 1,
Fig. 4 bis 6 jeweils eine schematische Darstellung des in weiteren Konstellationen eingebauten, mit Selbstkonfigurationsfunktion ausgestatteten Energiezählers gemäß Fig. 1.

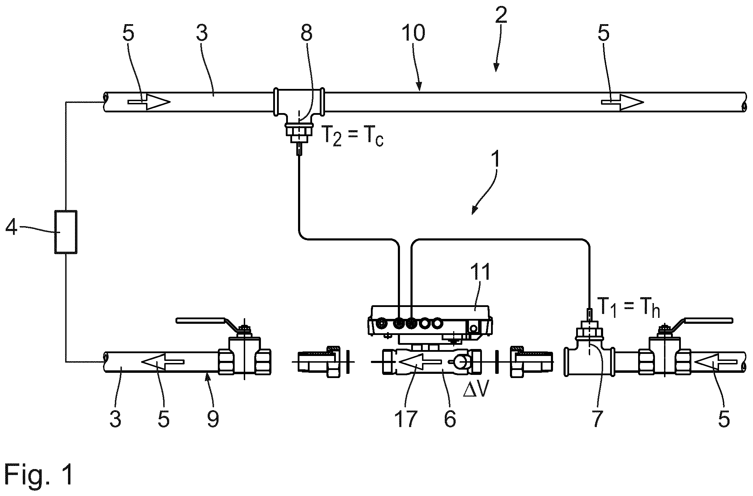

Einander entsprechende Teile sind in Fig. 1 bis 6 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel eines Energiezählers 1, der in ein Rohrsystem 2 eingebaut ist, gezeigt. In dem Rohrsystem 2 befindet sich ein Transportmedium 3, beispielsweise eine Flüssigkeit wie Wasser, mittels dessen thermische Energie an einen Verbraucher 4 geliefert wird. Das Transportmedium 3 durchfließt das Rohsystem 2 mit einer Flussrichtung 5.

Der Energiezähler 1 hat mehrere Sensoren zur Erfassung von Messwerten, insbesondere zwei nicht näher dargestellte Schallwandler, die Bestandteile einer Durchflussmesseinheit 6 sind, sowie einen ersten Temperatursensor 7 zur messtechnischen Erfassung einer ersten Temperatur T₁ und einen zweiten Temperatursensor 8 zur messtechnischen Erfassung einer zweiten Temperatur T₂. Bei dem gezeigten Ausführungsbeispiel ist die Durchflussmesseinheit 6 insbesondere ultraschall basiert und arbeitet vorzugsweise nach dem Laufzeitdifferenzprinzip. Sie dient zur Bestimmung eines die Durchflussmesseinheit 6 passierenden Volumenstroms ΔV des Transportmediums 3. Von der Durchflussmesseinheit 6 ist in Fig. 1 der Übersichtlichkeit halber nur das in das Rohrsystem 2 einzubauende Messrohr dargestellt. Bei der in Fig. 1 gezeigten Einbausituation sind die Durchflussmesseinheit 6 und der erste Temperatursensor 7 bezüglich des Verbrauchers 4 auf der gleichen Seite des Verbrauchers 4 in dem Rohrleitungssystem 2 angeordnet, nämlich auf der zum Verbraucher 4 hinführenden Seite des Verbrauchers 4, also insbesondere im Vorlauf 9. Letzterer bezeichnet den Teil des Rohrleitungssystems 2, in dem das Transportmedium 3 zum Verbraucher 4 hin transportiert wird. Demgegenüber ist der zweite Temperatursensor 8 auf der anderen Seite des Verbrauchers 4 in dem Rohrleitungssystem 2 angeordnet, nämlich auf der vom Verbraucher 4 wegführenden Seite des Verbrauchers 4, also insbesondere im Rücklauf 10. Letzterer bezeichnet den Teil des Rohrleitungssystems 2, in dem das Transportmedium 3 vom Verbraucher 4 weg transportiert wird. Bei dem in Fig. 1 gezeigten Ausführungsbeispiel des Energiezählers 1 sind die Durchflussmesseinheit 6 und der erste Temperatursensor 7 zwar auf der gleichen Seite des Verbrauchers 4 angeordnet, stellen aber gesonderte Baugruppen des Energiezählers 1 dar. Bei einem anderen nicht dargestellten Ausführungsbeispiel können sich diese beiden Komponenten in einer gemeinsamen Baugruppe befinden.

Der Energiezähler 1 weist als weitere Komponente eine Steuer- und Auswerteeinheit 11 auf, an welche die Durchflussmesseinheit 6 sowie die beiden Temperatursensoren 7, 8 insbesondere lösbar angeschlossen sind. Die Steuer- und Auswerteeinheit 11 ist eine elektronische Einheit. In ihr wird während des eigentlichen Zählbetriebs des Energiezählers 1 zunächst in an sich bekannter Weise aus der Laufzeitdifferenz der von den beiden Schallwandlern gegenläufig durch das Transportmedium 3 gesendeten Schallsignale der jeweils aktuelle Volumenstrom ΔV des Transportmediums 3 ermittelt. Daraus wird dann in Verbindung mit den beiden erfassten ebenfalls jeweils aktuellen Temperaturen T₁, T₂ in ebenfalls an sich bekannter Weise die aktuell an den Verbraucher 4 gelieferte thermische Energiemenge bestimmt, welche dann auch als Grundlage für die Abrechnung dienen kann.

Eine Besonderheit des Energiezählers 1 besteht darin, dass er werkseitig nicht auf eine bestimmte zu erfassende Energieart und auch nicht auf einen bestimmten Einbauort innerhalb des Rohrsystems 2 festgelegt ist. Er ist insofern ein universell einsetzbares Gerät, das sowohl als Wärmezähler als auch als Kältezähler sowie sowohl im Vorlauf 9 als auch im Rücklauf 10 betrieben werden kann. Die Festlegung dieser für den eigentlichen Zählbetrieb des Energiezählers 1 wichtigen Parameter kann der Energiezähler 1 selbsttätig während einer in einem Testbetrieb durchgeführten Selbstkonfiguration vornehmen. In der in Fig. 1 dargestellten Einbausituation ist der Energiezähler 1 ein Wärmezähler, dessen Hauptkomponenten (= Durchflussmesseinheit 6 und erster Temperatursensor 7) im Vorlauf 9 platziert sind, was im Rahmen des angesprochenen Testbetriebs anhand von entsprechenden in der Steuer-und Auswerteeinheit 11 durchgeführten Überprüfungen selbsttätig erkannt und zur entsprechenden Berücksichtigung im eigentlichen Zählbetrieb abgespeichert worden ist.

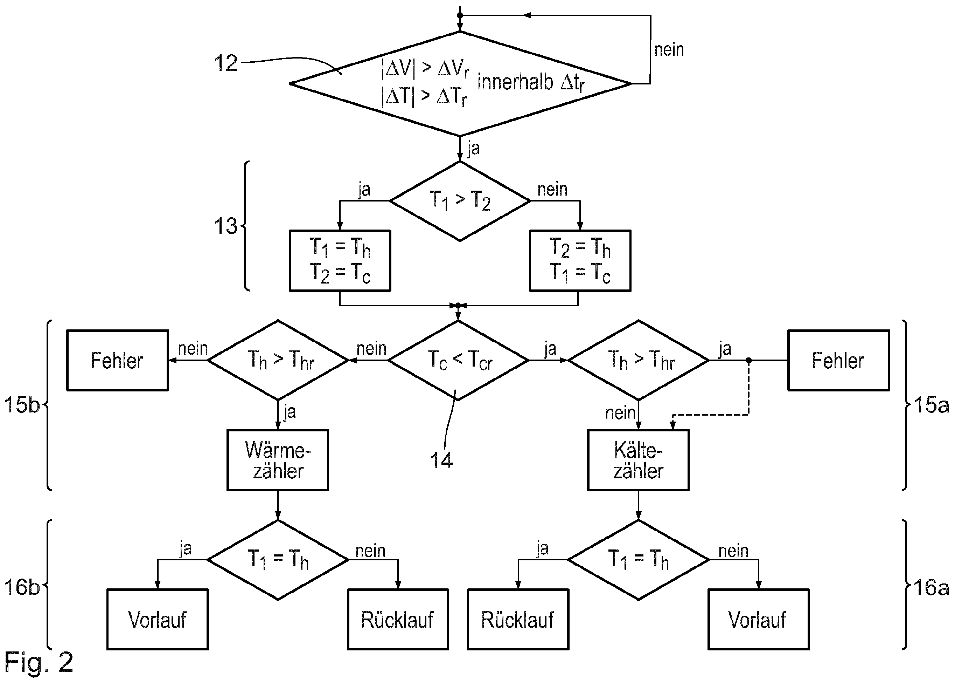

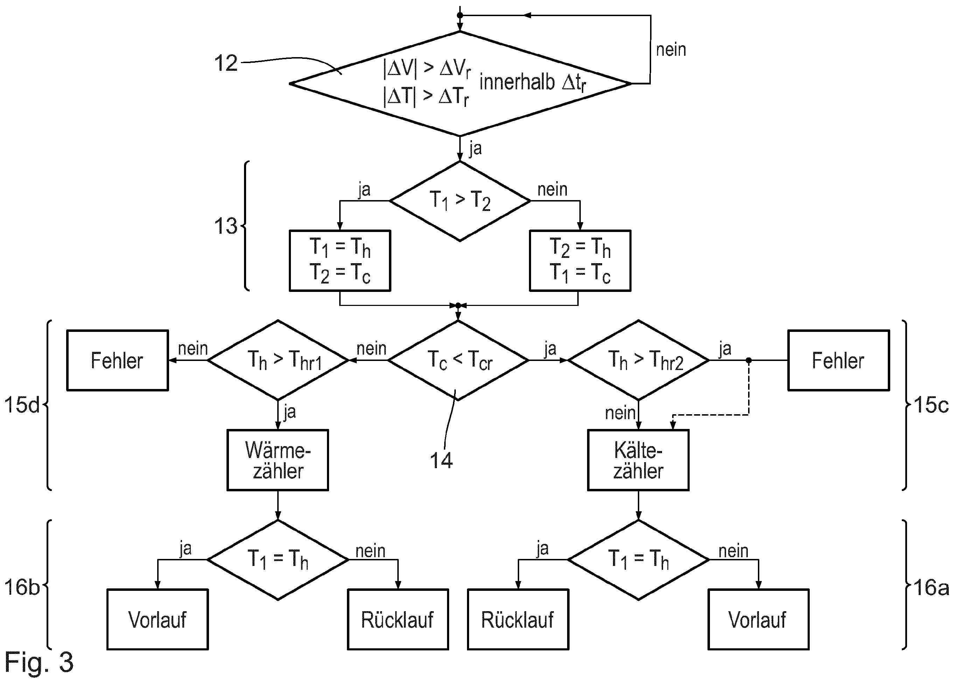

Weitere Details zu den während des Testbetriebs innerhalb der Steuer-und Auswerteeinheit 11 selbsttätig durchgeführten Überprüfungen sind den Darstellungen gemäß Fig. 2 und 3 zu entnehmen.

In Fig. 2 ist ein Ablaufdiagramm der während des Testbetriebs zur Selbstkonfiguration des Energiezählers 1 vorgenommenen Prüfungsschritte gezeigt.

Zu Beginn wird in einem Plausibilitätsschritt 12 überprüft, ob während des Testbetriebs innerhalb des Rohrsystems 2 Testbedingungen herrschen, unter denen aussagekräftige und weiter verwertbare Ergebnisse erzielt werden können. Die Testbedingungen sollten nach Möglichkeit nahe an denen des eigentlichen Zählbetriebs liegen. Da Letzteres nicht zwingend zu jedem Zeitpunkt gegeben sein muss, ist die Durchführung des Plausibilitätsschritts 12 sinnvoll. So kann es beispielsweise zu einer umgekehrten Flussrichtung des Transportmediums 3 innerhalb des Rohrsystems 2 kommen, z.B. beim Auftreten einer unerwünschten Druckdifferenz und eines daraus resultierenden Rückflusses des Transportmediums 3 in Richtung eines anderen (in Fig. 1 nicht gezeigten) Kreislaufs. Ein solcher Rückfluss kann z.B. bei aktiver Lüftung und/oder ausgeschaltetem Heizungssystem auftreten. Während eines solchen kurzzeitigen Rückwärtsflusses des Transportmediums 3 können auch Temperaturdifferenzen auftreten, die nicht mit denen während des eigentlichen Zählbetriebs übereinstimmen. Daneben gibt es auch noch andere Ursachen für solche nicht maßgeblichen Zustände innerhalb des Rohrsystems 2. Um zu verhindern, dass der Testbetrieb während einer solchen nicht maßgeblichen Sondersituation innerhalb des Rohrsystems 2 durchgeführt wird, und falsche Parameter für den eigentlichen Zählbetrieb hinterlegt werden, ist der Plausibilitätsschritt 12 vorgesehen.

Im Rahmen des Plausibilitätsschritts 12 wird deshalb überprüft, ob die folgenden Testbedingungen erfüllt sind. Zum einen wird geprüft, ob der Absolutwert des Volumenstroms |ΔV| größer als ein Durchfluss-Grenzwert ΔVᵣ von beispielsweise 10 % des Nenndurchflusses des Energiezählers 1 ist. Zum anderen wird geprüft, ob der Absolutwert der Temperaturdifferenz |ΔT| zwischen der ersten und der zweiten Temperatur T₁, T₂, also der Term |ΔT| = |T₁ - T₂|, größer als ein Temperaturdifferenz-Grenzwert ΔTᵣ von beispielsweise 2 K ist. Beide Bedingungen müssen zugleich und außerdem für eine Mindest-Zeitspanne Δₜᵣ von beispielsweise 60 Minuten erfüllt sein. Wenn diese Testbedingungen gegeben sind, wird der Plausibilitätsschritt 12 mit positivem Ergebnis abgeschlossen und der Testbetrieb fortgesetzt.

Als nächstes steht dann ein erster Temperatur-Vergleichsschritt 13 an, innerhalb dessen geprüft wird, welche der beiden gemessenen Temperaturen T₁, T₂ die höhere Temperatur Tₕ und welche die niedrigere Temperatur T_{c} ist. Außerdem erfolgt eine dementsprechende Zuordnung.

Danach wird in einem zweiten Temperatur-Vergleichsschritt 14 überprüft, ob die niedrigere Temperatur T_{c} kleiner als ein Kältezähler-Temperaturgrenzwert T_{cr} von beispielsweise 20°C ist. Je nach Ergebnis dieser Überprüfung erfolgt eine unterschiedliche Abzweigung für den weiteren Prüfung Fortgang.

Falls die Überprüfung des zweiten Temperatur-Vergleichsschritt 14 positiv ausfällt, also die niedrigere Temperatur T_{c} kleiner als der Kältezähler-Temperaturgrenzwert T_{cr} ist, wird in einem dritten Temperatur-Vergleichsschritt 15a überprüft, ob die höhere Temperatur Tₕ größer als ein Wärmezähler-Temperaturgrenzwert Tₕᵣ von beispielsweise 35°C ist. Falls Letzteres nicht zutreffen sollte, wird im Rahmen des Testbetriebs selbsttätig erkannt und auch abgespeichert, dass der Energiezähler 1 in der gegebenen Einbausituation als ein Kältezähler betrieben wird. Führt die Überprüfung dagegen zu dem Ergebnis, dass die höhere Temperatur Tₕ größer als der Wärmezähler-Temperaturgrenzwert Tₕᵣ ist, ergeben der zweite und der dritte Temperatur-Vergleichsschritt 14, 15a kein eindeutiges Resultat, sodass auf Vorliegen eines möglichen Fehlers entschieden wird, was dann in geeigneter Weise signalisiert und in der Steuer- und Auswerteeinheit 11 hinterlegt wird. Da es aber auch besondere Einbausituationen, beispielsweise in sehr heißen Gegenden geben kann, wo das Transportmedium 3 im Rücklauf 10 z.B. durch starke Sonneneinstrahlung sehr stark erhitzt wird, kann bei einem alternativen Ausführungsbeispiel selbst dann der Betrieb des Energiezählers 1 als Kältezähler erkannt und abgespeichert werden, wenn die höhere Temperatur Tₕ größer als der Wärmezähler-Temperaturgrenzwert Tₕᵣ ist. Hierbei wird dann auch die angesprochene besondere Einbausituation berücksichtigt. Diese Konstellation des alternativen Ausführungsbeispiels ist in dem Ablaufdiagramm gemäß Fig. 2 mit gestrichelter Linienführung dargestellt.

Falls die Überprüfung des zweiten Temperatur-Vergleichsschritt 14 dagegen negativ ausfällt, also die niedrigere Temperatur T_{c} nicht kleiner als der Kältezähler-Temperaturgrenzwert T_{cr} ist, wird in einem dritten Temperatur-Vergleichsschritt 15b überprüft, ob die höhere Temperatur Tₕ größer als ein Wärmezähler-Temperaturgrenzwert Tₕᵣ von beispielsweise ebenfalls 35°C ist. Falls Letzteres zutreffen sollte, wird im Rahmen des Testbetriebs selbsttätig erkannt und auch abgespeichert, dass der Energiezähler 1 in der gegebenen Einbausituation als ein Wärmezähler betrieben wird. Führt die Überprüfung dagegen zu dem Ergebnis, dass die höhere Temperatur Tₕ nicht größer als der Wärmezähler-Temperaturgrenzwert Tₕᵣ ist, ergeben der zweite und der dritte Temperatur-Vergleichsschritt 14, 15b kein eindeutiges Resultat, sodass auch hier auf Vorliegen eines möglichen Fehlers entschieden wird, was dann wiederum in geeigneter Weise signalisiert und in der Steuer- und Auswerteeinheit 11 hinterlegt wird.

Nach Erkennung und Zuordnung der Energieart im Rahmen der zweiten und dritten Temperatur-Vergleichsschritte 14, 15a, 15b erfolgt im Rahmen vierter Temperatur-Vergleichsschritte 16a, 16b eine Erkennung und Zuordnung des Einbauorts des Energiezählers 1. Hierbei wird z.B. jeweils überprüft, ob die erste Temperatur T₁ der höheren Temperatur Tₕ zugeordnet ist.

Wird diese Überprüfung im Rahmen des vierten Temperatur-Vergleichsschritts 16a, also nach vorheriger Festlegung des Energiezählers 1 als Kältezähler, positiv beschieden, wird als Einbauort der Rücklauf 10 erkannt und in der Steuer- und Auswerteeinheit 11 hinterlegt. Falls dagegen die erste Temperatur T₁ nicht die höhere Temperatur Tₕ sein sollte, wird als Einbauort des als Kältezähler betriebenen Energiezählers 1 der Vorlauf 9 erkannt und in der Steuer- und Auswerteeinheit 11 hinterlegt.

Wird diese Überprüfung im Rahmen des vierten Temperatur-Vergleichsschritts 16b, also nach vorheriger Festlegung des Energiezählers 1 als Wärmezähler, positiv beschieden, wird als Einbauort der Vorlauf 9 erkannt und in der Steuer- und Auswerteeinheit 11 hinterlegt. Falls dagegen die erste Temperatur T₁ nicht die höhere Temperatur Tₕ sein sollte, wird als Einbauort des als Wärmezähler betriebenen Energiezählers 1 der Rücklauf 10 erkannt und in der Steuer- und Auswerteeinheit 11 hinterlegt.

Ergänzend kann während des Testbetriebs außerdem auch eine Durchflussrichtung 17 (siehe Fig. 1) des Energiezählers 1 selbsttätig erkannt und in der Steuer-und Auswerteeinheit 11 hinterlegt werden. Dies kann sowohl anhand der zuvor erfolgten Erkennung/Festlegung der Energieart (Kältezähler oder Wärmezähler) und des Einbauorts (Vorlauf oder Rücklauf) als auch anhand des Vorzeichens des ermittelten Volumenstroms ΔV des Transportmediums 3 durch die Durchflussmesseinheit 6 erfolgen. Beide Varianten sind nicht in dem Ablaufdiagramm gemäß Fig. 2 mit dargestellt.

Bei einer ebenfalls figürlich nicht dargestellten alternativen Ausgestaltung des Testbetriebs kann der Plausibilitätsschritt nicht am Anfang, wie im Ablaufdiagramm gemäß Fig. 2 dargestellt, sondern zu einem anderen Zeitpunkt erfolgen, beispielsweise nachdem die anderen Überprüfungen durchgeführt worden sind, aber noch bevor deren Ergebnisse zur weiteren Verwendung während des eigentlichen Zählbetriebs in der Steuer-und Auswerteeinheit 11 hinterlegt werden.

In Fig. 3 ist ein Ablaufdiagramm einer anderen alternativen Ausgestaltung des Testbetriebs dargestellt. Es entspricht im Wesentlichen dem Ablaufdiagramm gemäß Fig. 2. Der einzige Unterschied liegt in der Ausgestaltung der dritten Temperatur-Vergleichsschritte 15c, 15d. Bei der Ausgestaltung des Testbetriebs gemäß dem in Fig. 2 gezeigten Ablaufdiagramm wird in den beiden dritten Temperatur-Vergleichsschritten 15a, 15b jeweils der gleiche Wärmezähler-Temperaturgrenzwert Tₕᵣ von beispielsweise 35°C verwendet. Demgegenüber sind bei der Ausgestaltung des Testbetriebs gemäß dem in Fig. 3 gezeigten Ablaufdiagramm in den beiden dritten Temperatur-Vergleichsschritten 15c, 15d unterschiedliche Wärmezähler-Temperaturgrenzwerte Tₕᵣ₁ und Tₕᵣ₂ vorgesehen. So liegt der nach negativem zweiten Temperatur-Vergleichsschritt 14 im dritten Temperatur-Vergleichsschritt 15d vorgesehene Wärmezähler-Temperaturgrenzwert Tₕᵣ₁ beispielsweise bei 35°C, wohingegen der nach positivem zweiten Temperatur-Vergleichsschritt 14 im dritten Temperatur-Vergleichsschritt 15c vorgesehene Wärmezähler-Temperaturgrenzwert Tₕᵣ₂ beispielsweise bei 25°C liegt. Dadurch wird eine größere Sicherheit bei der Erkennung/Zuordnung der Energieart des Energiezählers 1 erreicht. Unsichere oder gar falsche Zuordnungen als Wärmezähler oder als Kältezähler lassen sich so noch besser vermeiden.

Alle vorstehend erläuterten Überprüfungen und Festlegungen erfolgen selbsttätig während des Testbetriebs und insbesondere ohne jegliches Zutun des Bedien- oder Wartungspersonals.

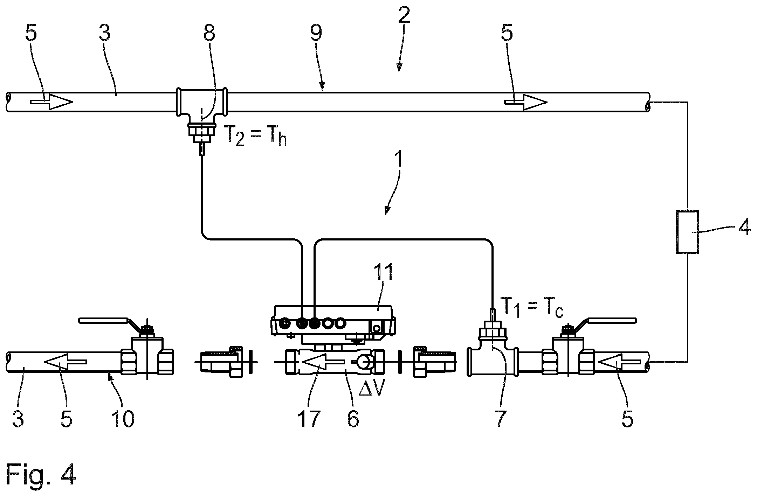

In Fig. 4 bis 6 sind verglichen mit der in Fig. 1 gezeigten Einbausituation andere Einbausituationen des Energiezählers 1 dargestellt, die aber alle anhand der im Rahmen des anhand der Ablaufdiagramme gemäß Fig. 2 und 3 erläuterten Testbetriebs durchgeführten Selbstkonfiguration erkannt und hinterlegt werden.

Bei der Einbausituation gemäß Fig. 1 ist die erste Temperatur T₁ die höhere Temperatur Tₕ und die zweite Temperatur T₂ die niedrigere Temperatur T_{c}. Daraus wird im Testbetrieb in Verbindung mit den Temperaturgrenzwerten T_{cr}, Tₕᵣ bzw. Tₕᵣ₁ automatisch abgeleitet, dass der Energiezähler 1 ein Wärmezähler ist, dessen Hauptkomponenten im Vorlauf 9 des Verbrauchers 4 angeordnet sind.

Bei der Einbausituation gemäß Fig. 4 ist die erste Temperatur T₁ die niedrigere Temperatur T_{c} und die zweite Temperatur T₂ die höhere Temperatur Tₕ. Daraus wird im Testbetrieb in Verbindung mit den Temperaturgrenzwerten T_{cr}, Tₕᵣ bzw. Tₕᵣ₁ selbststätig abgeleitet, dass der Energiezähler 1 ein Wärmezähler ist, dessen Hauptkomponenten im Rücklauf 10 des Verbrauchers 4 angeordnet sind.

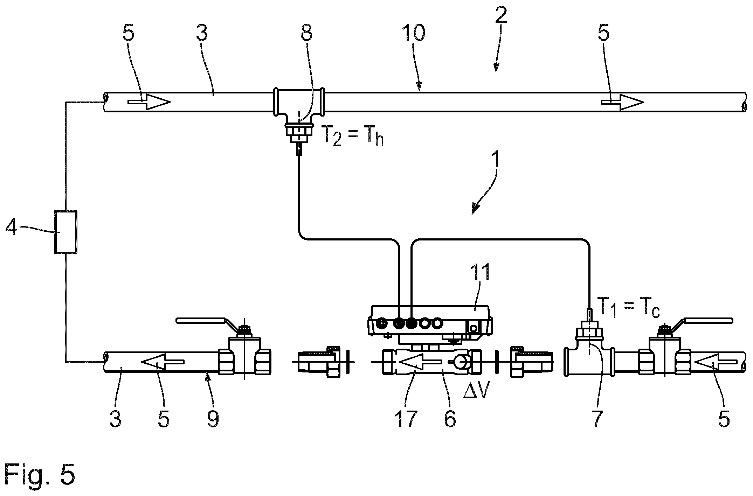

Bei der Einbausituation gemäß Fig. 5 ist die erste Temperatur T₁ die niedrigere Temperatur T_{c} und die zweite Temperatur T₂ die höhere Temperatur Tₕ. Daraus wird im Testbetrieb in Verbindung mit den Temperaturgrenzwerten T_{cr}, Tₕᵣ bzw. Tₕᵣ₂ selbststätig abgeleitet, dass der Energiezähler 1 ein Kältezähler ist, dessen Hauptkomponenten im Vorlauf 9 des Verbrauchers 4 angeordnet sind.

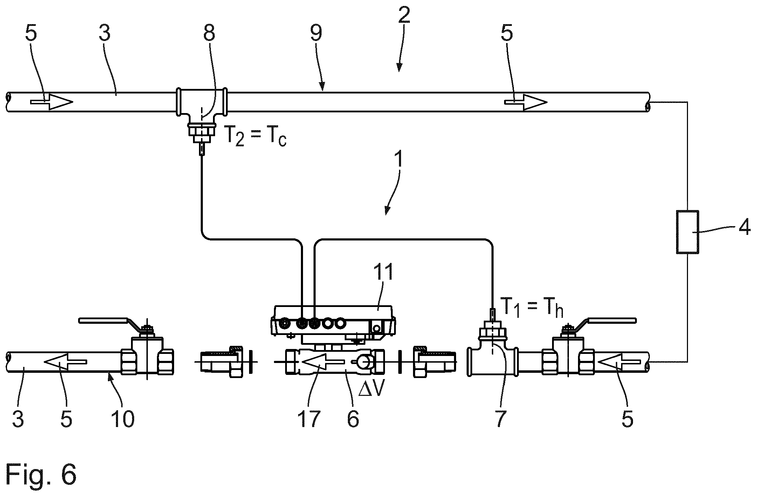

Bei der Einbausituation gemäß Fig. 6 ist die erste Temperatur T₁ die höhere Temperatur Tₕ und die zweite Temperatur T₂ die niedrigere Temperatur T_{c}. Daraus wird im Testbetrieb in Verbindung mit den Temperaturgrenzwerten T_{cr}, Tₕᵣ bzw. Tₕᵣ₂ selbststätig abgeleitet, dass der Energiezähler 1 ein Kältezähler ist, dessen Hauptkomponenten im Rücklauf 10 des Verbrauchers 4 angeordnet sind.

Der Energiezähler 1 zeichnet sich im Vergleich zu bisher bekannten Energiezählern dadurch aus, dass die ohnehin ermittelten Messergebnisse, insbesondere für die erste und zweite Temperatur T₁, T₂, auch dazu genutzt werden, um die Energieart und den Einbauort des Energiezählers 1 automatisch mittels einer Selbstkonfiguration zu erkennen. Anhand vorhandener Betriebsdaten werden somit die Energieart, der Einbauort und gegebenenfalls auch die Durchflussrichtung 17 des Energiezählers 1 vollständig und automatisch und insbesondere ohne Eingriff des Bedien- oder Wartungspersonals erkannt und festgelegt. Dies hat den Vorteil, dass diese Parameter bei einem Energiezähler zur Erfassung einer gelieferten thermischen Energiemenge erstmalig nicht mehr werkseitig festgelegt werden müssen. Dadurch wird eine starke Reduzierung der vorzuhaltenden Variantenvielfalt an solchen Energiezählern erreicht. Außerdem reduzieren sich die Anforderungen bei der Montage, da ein wichtiger Teil der Parametrierung selbsttätig vom Energiezähler 1 durchgeführt wird. Weiterhin sinkt auch die Fehlerrate bei der Installation.

## Patentansprüche

1. Energiezähler zur Erfassung einer mittels eines Transportmediums (3) an einen Verbraucher (4) gelieferten thermischen Energiemenge aufweisend
a) eine Durchflussmesseinheit (6), einen ersten Temperatursensor (7) zur Erfassung einer ersten Temperatur (T₁) des Transportmediums (3), einen zweiten Temperatursensor (8) zur Erfassung einer zweiten Temperatur (T₂) des Transportmediums (3) und eine Steuer-und Auswerteeinheit (11),
wobei
b) während des eigentlichen Betriebs des Energiezählers (1) von dem ersten und zweiten Temperatursensor (7, 8) jeweils einer auf einer zum Verbraucher (4) hinführenden Seite des Verbrauchers (4) und der andere auf einer vom Verbraucher (4) wegführenden Seite des Verbrauchers (4) platziert ist,
c) die Durchflussmesseinheit (6) sowie der erste und der zweite Temperatursensor (7, 8) zumindest während des eigentlichen Betriebs des Energiezählers (1) an die Steuer- und Auswerteeinheit (11) angeschlossen sind,
d) in der Steuer- und Auswerteeinheit (11) mindestens ein Kältezähler-Temperaturgrenzwert (T_{cr}) und mindestens ein Wärmezähler-Temperaturgrenzwert (Tₕᵣ; Tₕᵣ₁, Tₕᵣ₂) hinterlegt sind, und
e) die Steuer- und Auswerteeinheit (11) dazu ausgelegt ist, während eines Testbetriebs
e1) anhand eines ersten Temperatur-Vergleichs (13) der ersten und der zweiten Temperatur (T₁, T₂) die hiervon niedrigere Temperatur (T_{c}) und höhere Temperatur (Tₕ) zu ermitteln, und
e2) anhand eines zweiten Temperatur-Vergleichs (14) der niedrigeren Temperatur (T_{c}) mit dem mindestens einen Kältezähler-Temperaturgrenzwert (T_{cr}) und eines dritten Temperatur-Vergleichs (15a, 15b; 15c, 15d) der höheren Temperatur (Tₕ) mit dem mindestens einen Wärmezähler-Temperaturgrenzwert (Tₕᵣ; Tₕᵣ₁, Tₕᵣ₂) selbsttätig zu erkennen und festzuhalten, ob der Energiezähler (1) ein Wärmezähler oder ein Kältezähler während des späteren eigentlichen Zählbetriebs ist, wobei
der Energiezähler als Kältezähler eingestuft und festgehalten wird, wenn die niedrigere Temperatur (T_{c}) unter dem mindestens einen Kältezähler-Temperaturgrenzwert (T_{cr}) und die höhere Temperatur (Tₕ) unter dem mindestens einen Wärmezähler-Temperaturgrenzwert (Tₕᵣ; Tₕᵣ₁, Tₕᵣ₂) liegt, und
der Energiezähler als Wärmezähler eingestuft und festgehalten wird, wenn die niedrigere Temperatur (T_{c}) über dem mindestens einen Kältezähler-Temperaturgrenzwert (T_{cr}) und die höhere Temperatur (Tₕ) über dem mindestens einen Wärmezähler-Temperaturgrenzwert (Tₕᵣ; Tₕᵣ₁, Tₕᵣ₂) liegt.

2. Energiezähler nach Anspruch 1, wobei in der Steuer- und Auswerteeinheit (11) ein erster und ein zweiter Wärmezähler-Temperaturgrenzwert (Tₕᵣ₁, Tₕᵣ₂) hinterlegt sind, und die Steuer- und Auswerteeinheit (11) dazu ausgelegt ist, während des Testbetriebs bei der selbsttätigen Erkennung der Art des Energiezählers (1) je nach Ergebnis des zweiten Temperatur-Vergleichs (14) beim dritten Temperatur-Vergleich (15c, 15d) die höhere Temperatur (Tₕ) mit dem ersten Wärmezähler-Temperaturgrenzwert (Tₕᵣ₁) oder mit dem zweiten Wärmezähler-Temperaturgrenzwert (Tₕᵣ₂) zu vergleichen.

3. Energiezähler nach Anspruch 1 oder 2, wobei während des Betriebs des Energiezählers (1) die Durchflussmesseinheit (6) auf der gleichen Seite des Verbrauchers (4) wie der erste Temperatursensor (7) platziert ist, wobei die Steuer-und Auswerteeinheit (11) dazu ausgelegt ist, während des Testbetriebs anhand der Zuordnung der ersten oder zweiten Temperatur (T₁; T₂) jeweils zur niedrigeren oder höheren Temperatur (Tₕ; T_{c}) selbsttätig zu erkennen und für den späteren eigentlichen Zählbetrieb festzuhalten, ob die Durchflussmesseinheit (6) und der erste Temperatursensor (7) im Vorlauf (9) oder im Rücklauf (10) platziert sind.

4. Energiezähler nach einem der vorhergehenden Ansprüche, wobei die Steuer-und Auswerteeinheit (11) dazu ausgelegt ist, während des Testbetriebs einen Volumenstrom (ΔV) des Transportmediums (3) durch die Durchflussmesseinheit (6) zu ermitteln und anhand des Vorzeichens des Volumenstroms (ΔV) eine Durchflussrichtung (17) des Transportmediums (3) durch die Durchflussmesseinheit (6) selbsttätig zu erkennen und für den späteren eigentlichen Zählbetrieb festzuhalten.

5. Energiezähler nach einem der vorhergehenden Ansprüche, wobei die Steuer-und Auswerteeinheit (11) zu einer Prüfung ausgelegt ist, ob Testbedingungen herrschen, unter denen der Testbetrieb zu aussagekräftigen Ergebnissen führt.

6. Energiezähler nach Anspruch 5, wobei die von Steuer- und Auswerteeinheit (11) geprüften Testbedingungen sind, ob innerhalb einer Mindest-Zeitspanne (Δtᵣ) sowohl ein über einem Durchfluss-Grenzwert (ΔVᵣ) liegender absoluter Volumenstrom (|ΔV|) des Transportmediums durch die Durchflussmesseinheit (6) als auch eine über einem Temperaturdifferenz-Grenzwert (ΔTᵣ) liegende absolute Temperaturdifferenz (|ΔT|) zwischen der ersten und der zweiten Temperatur (T₁, T₂) gegeben sind.

7. Verfahren zur Erfassung einer mittels eines Transportmediums (3) an einen Verbraucher (4) gelieferten thermischen Energiemenge, bei dem
a) ein Volumenstrom (ΔV) des strömenden Transportmediums (3) gemessen wird,
b) auf einer zum Verbraucher (4) hinführenden Seite des Verbrauchers (4) eine erste Temperatur (T₁) des Transportmediums (3) und auf einer vom Verbraucher (4) wegführenden Seite des Verbrauchers (4) eine zweite Temperatur (T₂) des Transportmediums (3) gemessen werden,
c) die thermische Energiemenge während des eigentlichen Zählbetriebs anhand des gemessenen Volumenstroms (ΔV) und der gemessenen ersten und zweiten Temperatur (T₁, T₂) ermittelt wird, und
d) während eines Testbetriebs
d1) anhand eines ersten Temperatur-Vergleichs (13) der ersten und der zweiten Temperatur (T₁, T₂) die hiervon niedrigere Temperatur (T_{c}) und höhere Temperatur (Tₕ) ermittelt werden, und
d2) anhand eines zweiten Temperatur-Vergleichs (14) der niedrigeren Temperatur (T_{c}) mit einem Kältezähler-Grenzwert (T_{cr}) und eines dritten Temperatur-Vergleichs (15a, 15b; 15c, 15d) der höheren Temperatur (Tₕ) mit einem Wärmezähler-Grenzwert (Tₕᵣ; Tₕᵣ₁, Tₕᵣ₂) selbsttätig erkannt und festgehalten wird, ob die während des späteren eigentlichen Zählbetriebs erfasste thermische Energiemenge eine Wärmemenge oder eine Kältemenge ist, wobei
die thermische Energiemenge als Kältemenge eingestuft und festgehalten wird, wenn die niedrigere Temperatur (T_{c}) unter dem Kältezähler-Temperaturgrenzwert (T_{cr}) und die höhere Temperatur (Tₕ) unter dem Wärmezähler-Temperaturgrenzwert (Tₕᵣ; Tₕᵣ₁, Tₕᵣ₂) liegt, und
die thermische Energiemenge als Wärmemenge eingestuft und festgehalten wird, wenn die niedrigere Temperatur (T_{c}) über dem Kältezähler-Temperaturgrenzwert (T_{cr}) und die höhere Temperatur (Tₕ) über dem Wärmezähler-Temperaturgrenzwert (Tₕᵣ; Tₕᵣ₁, Tₕᵣ₂) liegt.

8. Verfahren nach Anspruch 7, wobei je nach Ergebnis des zweiten Temperatur-Vergleichs (14) beim dritten Temperatur-Vergleich (15c, 15d) die höhere Temperatur (Tₕ) mit einem ersten Wärmezähler-Temperaturgrenzwert (Tₕᵣ₁) oder mit einem zweiten Wärmezähler-Temperaturgrenzwert (Tₕᵣ₂) verglichen wird.

9. Verfahren nach Anspruch 7 oder 8, wobei die Messung des Volumenstroms (ΔV) auf der gleichen Seite des Verbrauchers (4) wie die Messung der ersten Temperatur (T₁) durchgeführt wird, und während des Testbetriebs anhand der Zuordnung der ersten oder zweiten Temperatur (T1; T2) jeweils zur niedrigeren oder höheren Temperatur (Tₕ; T_{c}) selbsttätig erkannt und für den späteren eigentlichen Zählbetrieb festgehalten wird, ob die Messung des Volumenstroms (ΔV) und die Messung der ersten Temperatur (T₁) im Vorlauf oder im Rücklauf durchgeführt werden.

10. Verfahren nach einem der Ansprüche 7 bis 9, wobei während des Testbetriebs anhand des Vorzeichens des Volumenstroms (ΔV) eine Durchflussrichtung des Transportmediums (3) durch eine zur Messung des Volumenstroms (ΔV) verwendete Durchflussmesseinheit (6) selbsttätig erkannt und für den späteren eigentlichen Zählbetrieb festgehalten wird.

11. Verfahren nach einem der Ansprüche 7 bis 10, wobei geprüft wird, ob Testbedingungen herrschen, unter denen der Testbetrieb zu aussagekräftigen Ergebnissen führt.

12. Verfahren nach Anspruch 11, wobei die geprüften Testbedingungen sind, ob innerhalb einer Mindest-Zeitspanne (Δtᵣ) sowohl ein über einem Durchfluss-Grenzwert (ΔVᵣ) liegender absoluter Volumenstrom (|ΔV|) des Transportmediums (3) als auch eine über einem Temperaturdifferenz-Grenzwert (ΔTᵣ) liegende absolute Temperaturdifferenz (|ΔT|) zwischen der ersten und der zweiten Temperatur (T₁, T₂) gegeben sind.

## Claims

1. An energy meter for detecting a thermal energy quantity supplied by means of a transport medium (3) to a consumer (4) having
(a) a throughflow measurement unit (6), a first temperature sensor (7) for detecting a first temperature (T₁) of the transport medium (3), a second temperature sensor (8) for detecting a second temperature (T₂) of the transport medium (3) and a control and evaluation unit (11),
wherein
b) during the actual operation of the energy meter (1) of the first and second temperature sensor (7, 8) in each case one is placed at a side of the consumer (4) leading to the consumer (4) and the other is placed at a side of the consumer (4) leading away from the consumer (4),
c) the throughflow measurement unit (6) and the first and the second temperature sensor (7, 8) are connected to the control and evaluation unit (11) at least during the actual operation of the energy meter (1),
d) in the control and evaluation unit (11) at least one cold meter temperature limit value (T_{cr}) and at least one heat meter temperature limit value (Tₕᵣ, Tₕᵣ₁, Tₕᵣ₂) are stored, and
e) the control and evaluation unit (11) is designed, during a test operation,
e1) using a first temperature comparison (13) of the first and the second temperature (T₁, T₂), to establish the lower temperature (T_{c}) and higher temperature (Tₕ) thereof, and
e2) using a second temperature comparison (14) of the lower temperature (T_{c}) with the at least one cold meter temperature limit value (T_{cr}) and a third temperature comparison (15a, 15b; 15c, 15d) of the higher temperature (Tₕ) with the at least one heat meter temperature limit value (Tₕᵣ, Tₕᵣ₁, Tₕᵣ₂), to independently identify and record whether the energy meter (1) is a heat meter or a cold meter during the subsequent actual metering operation, wherein
the energy meter is classified and recorded as a cold meter when the lower temperature (T_{c}) is below the at least one cold meter temperature limit value (T_{cr}) and the higher temperature (Tₕ) is below the at least one heat meter temperature limit value (Tₕᵣ, Tₕᵣ₁, Tₕᵣ₂), and
the energy meter is classified and recorded as a heat meter when the lower temperature (T_{c}) is above the at least one cold meter temperature limit value (T_{cr}) and the higher temperature (Tₕ) is above the at least one heat meter temperature limit value (Tₕᵣ, Tₕᵣ₁, Tₕᵣ₂).

2. The energy meter according to claim 1, wherein in the control and evaluation unit (11) a first and a second heat meter temperature limit value (Tₕᵣ₁, Tₕᵣ₂) are stored, and the control and evaluation unit (11) is designed, during the test operation in the independent identification of the type of the energy meter (1) depending on the result of the second temperature comparison (14) in the third temperature comparison (15c, 15d), to compare the higher temperature (Tₕ) with the first heat meter temperature limit value (Tₕᵣ₁) or the second heat meter temperature limit value (Tₕᵣ₂).

3. The energy meter according to claim 1 or 2, wherein, during the operation of the energy meter (1), the throughflow measurement unit (6) is placed at the same side of the consumer (4) as the first temperature sensor (7), wherein the control and evaluation unit (11) is designed, during the test operation, using the association of the first or second temperature (T₁; T₂) in each case with the lower or higher temperature (Tₕ; T_{c}), to independently identify and record for the subsequent actual metering operation whether the throughflow measurement unit (6) and the first temperature sensor (7) are placed in the forward flow (9) or the return flow (10).

4. The energy meter according to any one of the preceding claims, wherein the control and evaluation unit (11) is designed, during the test operation, to establish a volume flow (ΔV) of the transport medium (3) through the throughflow measurement unit (6) and, using the prefix of the volume flow (ΔV), to independently identify a throughflow direction (17) of the transport medium (3) through the throughflow measurement unit (6) and to record it for the subsequent actual metering operation.

5. The energy meter according to any one of the preceding claims, wherein the control and evaluation unit (11) is designed to verify whether test conditions under which the test operation leads to meaningful results are present.

6. The energy meter according to claim 5, wherein the test conditions verified by the control and evaluation unit (11) are whether within a minimum time period (Δtᵣ) both an absolute volume flow (|ΔV|), which is above a throughflow limit value (ΔVᵣ), of the transport medium through the throughflow measurement unit (6) and an absolute temperature difference (|ΔT|) between the first and the second temperature (T₁; T₂), which is above a temperature difference limit value (ΔTᵣ) are given

7. A method for detecting a thermal energy quantity supplied by means of a transport medium (3) to a consumer (4), in which
a) a volume flow (ΔV) of the flowing transport medium (3) is measured,
b) at a side of the consumer (4) leading to the consumer (4) a first temperature (T₁) of the transport medium (3) and at a side of the consumer (4) leading away from the consumer (4) a second temperature (T₂) of the transport medium (3) are measured,
c) the thermal energy quantity during the actual metering operation is established using the measured volume flow (ΔV) and the measured first and second temperature (T₁, T₂), and
d) during a test operation,
d1) using a first temperature comparison (13) of the first and the second temperature (T₁, T₂) the lower temperature (T_{c}) and higher temperature (Tₕ) thereof are established, and
d2) using a second temperature comparison (14) of the lower temperature (T_{c}) with a cold meter limit value (T_{cr}) and a third temperature comparison (15a, 15b; 15c, 15d) of the higher temperature (Tₕ) with a heat meter limit value (Tₕᵣ; Tₕᵣ₁, Tₕᵣ₂), it is independently identified and recorded whether the thermal energy quantity detected during the subsequent actual metering operation is a hot quantity or a cold quantity, wherein
the thermal energy quantity is classified and recorded as a cold quantity when the lower temperature (T_{c}) is below the cold meter temperature limit value (T_{cr}) and the higher temperature (Tₕ) is below the heat meter temperature limit value (Tₕᵣ; Tₕᵣ₁, Tₕᵣ₂), and
the thermal energy quantity is classified and recorded as a hot quantity when the lower temperature (T_{c}) is above the cold meter temperature limit value (T_{cr}) and the higher temperature (Tₕ) is above the heat meter temperature limit value (Tₕᵣ; Tₕᵣ₁, Tₕᵣ₂).

8. The method according to claim 7, wherein, depending on the result of the second temperature comparison (14) in the third temperature comparison (15c, 15d), the higher temperature (Tₕ) is compared with a first heat meter temperature limit value (Tₕᵣ₁) or with a second heat meter temperature limit value (Tₕᵣ₂).

9. The method according to claim 7 or 8, wherein the measurement of the volume flow (ΔV) is carried out at the same side of the consumer (4) as the measurement of the first temperature (T₁), and during the test operation, using the association of the first or second temperature (T₁; T₂) in each case with respect to the lower or higher temperature (Tₕ; T_{c}) it is independently identified and recorded for the subsequent actual metering operation whether the measurement of the volume flow (ΔV) and the measurement of the first temperature (T₁) are carried out in forward flow or return flow.

10. The method according to any one of claims 7 to 9, wherein, during the test operation using the prefix of the volume flow (ΔV), a throughflow direction of the transport medium (3) is independently identified and recorded for the subsequent actual metering operation through a throughflow measurement unit (6) which is used to measure the volume flow (ΔV).

11. The method according to any one of claims 7 to 10, wherein it is verified whether test conditions under which the test operation leads to meaningful results are present.

12. The method according to claim 11, wherein the test conditions verified are whether within a minimum time period (Δtᵣ) both an absolute volume flow (|ΔV|) of the transport medium (3), which is above a throughflow limit value (ΔVᵣ), and an absolute temperature difference (|ΔT|) between the first and the second temperature (T₁, T₂) above a temperature difference limit value (ΔTᵣ) are given.

## Revendications

1. Compteur d'énergie pour la détection d'une quantité d'énergie thermique fournie à un consommateur (4) au moyen d'un milieu de transport (3), présentant
a) une unité de mesure de débit (6), un premier capteur de température (7) pour la détection d'une première température (T₁) du milieu de transport (3), un deuxième capteur de température (8) pour la détection d'une deuxième température (T₂) du milieu de transport (3) et une unité de commande et d'évaluation (11),
dans lequel
b) pendant le fonctionnement proprement dit du compteur d'énergie (1), l'un du premier et deuxième capteur de température (7, 8) est respectivement placé sur un côté du consommateur (4) menant au consommateur (4) et l'autre sur un côté du consommateur (4) s'éloignant du consommateur (4),
c) l'unité de mesure de débit (6) ainsi que le premier et le deuxième capteur de température (7, 8) sont raccordés à l'unité de commande et d'évaluation (11) au moins pendant le fonctionnement proprement dit du compteur d'énergie (1),
d) au moins une valeur limite de température de compteur de froid (T_{cr}) et au moins une valeur limite de température de compteur de chaleur (Tₕᵣ ; Tₕᵣ₁, Tₕᵣ₂) sont enregistrées dans l'unité de commande et d'évaluation (11), et
e) l'unité de commande et d'évaluation (11) est conçue, pendant un test de fonctionnement,
e1) pour, au moyen d'une première comparaison de température (13) entre la première et la deuxième température (T₁, T₂), déterminer la température inférieure (T_{c}) et la température supérieure (Tₕ) de celles-ci, et
e2) pour, au moyen d'une deuxième comparaison de température (14) entre la température inférieure (T_{c}) et l'au moins une valeur limite de température de compteur de froid (T_{cr}) et d'une troisième comparaison de température (15a, 15b ; 15c, 15d) entre la température supérieure (Tₕ) et l'au moins une valeur limite de température de compteur de chaleur (Tₕᵣ ; T_{hr1,} Tₕᵣ₂), reconnaître et consigner indépendamment si le compteur d'énergie (1) est un compteur de chaleur ou un compteur de froid pendant le fonctionnement de comptage proprement dit ultérieur, dans lequel
le compteur d'énergie est classé et consigné comme compteur de froid lorsque la température inférieure (T_{c}) est inférieure à l'au moins une valeur limite de température de compteur de froid (T_{cr}) et la température supérieure (Tₕ) est inférieure à l'au moins une valeur limite de température de compteur de chaleur (Tₕᵣ ; Tₕᵣ₁, Tₕᵣ₂), et
le compteur d'énergie est classé et consigné comme compteur de chaleur lorsque la température inférieure (T_{c}) est supérieure à l'au moins une valeur limite de température de compteur de froid (T_{cr}) et la température supérieure (Tₕ) est supérieure à l'au moins une valeur limite de température de compteur de chaleur (Tₕᵣ ; Tₕᵣ₁, Tₕᵣ₂).

2. Compteur d'énergie selon la revendication 1, dans lequel une première et une deuxième valeur limite de température de compteur de chaleur (Tₕᵣ₁, Tₕᵣ₂) sont enregistrées dans l'unité de commande et d'évaluation (11), et l'unité de commande et d'évaluation (11) est conçue pour comparer, lors de la troisième comparaison de température (15c, 15d), la température supérieure (Tₕ) à la première valeur limite de température de compteur de chaleur (Tₕᵣ₁) ou à la deuxième valeur limite de température de compteur de chaleur (Tₕᵣ₂), pendant le fonctionnement test, lors de la reconnaissance automatique du type de compteur d'énergie (1), en fonction du résultat de la deuxième comparaison de température (14).

3. Compteur d'énergie selon la revendication 1 ou 2, dans lequel, pendant le fonctionnement du compteur d'énergie (1), l'unité de mesure de débit (6) est placée du même côté du consommateur (4) que le premier capteur de température (7), dans lequel l'unité de commande et d'évaluation (11) est conçue pour reconnaître et consigner indépendamment pour le fonctionnement de comptage proprement dit ultérieur, si l'unité de mesure de débit (6) et le premier capteur de température (7) sont placés dans l'aller (9) ou dans le retour (10), pendant le fonctionnement test, au moyen de l'affectation de la première ou deuxième température (T₁ ; T₂) respectivement à la température inférieure ou supérieure (Tₕ ; T_{c}).

4. Compteur d'énergie selon l'une quelconque des revendications précédentes, dans lequel l'unité de commande et d'évaluation (11) est conçue pour déterminer, pendant le fonctionnement test, un débit volumique (ΔV) du milieu de transport (3) à travers l'unité de mesure de débit (6) et pour reconnaître indépendamment, au moyen du signe du débit volumique (ΔV), un sens d'écoulement (17) du milieu de transport (3) à travers l'unité de mesure de débit (6) et le consigner pour le fonctionnement de comptage proprement dit ultérieur.

5. Compteur d'énergie selon l'une quelconque des revendications précédentes, dans lequel l'unité de commande et d'évaluation (11) est conçue pour vérifier l'existence de conditions de test dans lesquelles le fonctionnement test conduit à des résultats pertinents.

6. Compteur d'énergie selon la revendication 5, dans lequel les conditions de test vérifiées par l'unité de commande et d'évaluation (11) sont de savoir si tant un débit volumique absolu (|ΔV|) du milieu de transport à travers l'unité de mesure de débit (6) supérieur à une valeur limite de débit (ΔVᵣ) qu'une différence de température absolue (|ΔT|) entre la première et la deuxième température (T₁, T₂) supérieure à une valeur limite de différence de température (Δtᵣ) sont donnés à l'intérieur d'un intervalle de temps minimal (Δtᵣ).

7. Procédé pour la détection d'une quantité d'énergie thermique fournie à un consommateur (4) au moyen d'un milieu de transport (3), dans lequel
a) un débit volumique (ΔV) du milieu de transport (3) s'écoulant est mesuré,
b) une première température (T₁) du milieu de transport (3) sur un côté du consommateur (4) menant au consommateur (4) et une deuxième température (T₂) du milieu de transport (3) sur un côté du consommateur (4) s'éloignant du consommateur (4) sont mesurées,
c) la quantité d'énergie thermique est déterminée pendant le fonctionnement de comptage proprement dit au moyen du débit volumique mesuré (ΔV) et de la première et deuxième température mesurées (T₁, T₂), et
d) pendant un fonctionnement test,
d1) la température inférieure (T_{c}) et la température supérieure (Tₕ) de celles-ci sont déterminées au moyen d'une première comparaison de température (13) entre la première et la deuxième température (T₁, T₂),, et
d2) au moyen d'une deuxième comparaison de température (14) entre la température inférieure (T_{c}) et une valeur limite de compteur de froid (T_{cr}) et d'une troisième comparaison de température (15a, 15b ; 15c, 15d) entre la température supérieure (Tₕ) et une valeur limite de compteur de chaleur (Tₕᵣ ; Tₕᵣ₁, Tₕᵣ₂), le fait de savoir si la quantité d'énergie thermique détectée pendant le fonctionnement de comptage proprement dit ultérieur est une quantité de chaleur ou une quantité de froid est reconnu et consigné indépendamment, dans lequel
la quantité d'énergie thermique est classée et consignée comme quantité de froid lorsque la température inférieure (T_{c}) est inférieure à la valeur limite de température de compteur de froid (T_{cr}) et la température supérieure (Tₕ) est inférieure à la valeur limite de température de compteur de chaleur (Tₕᵣ ; Tₕᵣ₁, Tₕᵣ₂), et
la quantité d'énergie thermique est classée et consignée comme quantité de chaleur lorsque la température inférieure (T_{c}) est supérieure à la valeur limite de température de compteur de froid (T_{cr}) et la température supérieure (Tₕ) est supérieure à la valeur limite de température de compteur de chaleur (Tₕᵣ ; T_{hr1,} Tₕᵣ₂).

8. Procédé selon la revendication 7, dans lequel en fonction du résultat de la deuxième comparaison de température (14), lors de la troisième comparaison de température (15c, 15d), la température supérieure (Tₕ) est comparée à une première valeur limite de température de compteur de chaleur (Tₕᵣ₁) ou à une deuxième valeur limite de température de compteur de chaleur (Tₕᵣ₂).

9. Procédé selon la revendication 7 ou 8, dans lequel la mesure du débit volumique (ΔV) est effectuée du même côté du consommateur (4) que la mesure de la première température (T₁), et pendant le fonctionnement test, au moyen de l'affectation de la première ou deuxième température (T1 ; T2) respectivement à la température inférieure ou supérieure (Tₕ ; T_{c}), le fait de savoir si la mesure du débit volumique (ΔV) et la mesure de la première température (T₁) sont effectuées dans l'aller ou dans le retour est reconnu et consigné indépendamment pour le fonctionnement de comptage proprement dit ultérieur.

10. Procédé selon l'une des revendications 7 à 9, dans lequel, pendant le fonctionnement de test, un sens d'écoulement du milieu de transport (3) est reconnu au moyen du signe du débit volumique (ΔV), par une unité de mesure de débit (6) utilisée pour la mesure du débit volumique (ΔV) et consigné indépendamment pour le fonctionnement de comptage proprement dit ultérieur.

11. Procédé selon l'une des revendications 7 à 10, dans lequel l'existence de conditions de test dans lesquelles le fonctionnement test conduit à des résultats pertinents est vérifiée.

12. Procédé selon la revendication 11, dans lequel les conditions de test vérifiées sont de savoir si tant un débit volumique absolu (|ΔV|) du milieu de transport (3) supérieur à une valeur limite de débit (ΔVᵣ) qu'une différence de température absolue (|ΔT|) entre la première et la deuxième température (T₁, T₂) supérieure à une valeur limite de différence de température (ΔTᵣ) sont donnés à l'intérieur d'un intervalle de temps minimal (Δtᵣ).
